# EUROPEAN PATENT SPECIFICATION

(11) **EP 3 372 908 B1**
(45) Date of publication and mention of the grant of the patent: **29.07.2020**
(21) Application number: 18159374.0
(22) Date of filing: 01.03.2018
(51) Int. Cl.: F24F 12/00, E06B 7/02

(54) **MULTIFUNCTIONAL THERMALLY INSULATING UNIT FOR OPENINGS FOR DOORS OR WINDOWS AND AIR TREATMENT APPARATUS COMPRISED IN THE UNIT**
MULTIFUNKTIONELLE WÄRMEISOLIERENDE EINHEIT FÜR ÖFFNUNGEN FÜR TÜREN ODER FENSTER UND LUFTAUFBEREITUNGSVORRICHTUNG IN DER EINHEIT
UNITÉ D'ISOLATION THERMIQUE MULTIFONCTIONNELLE POUR DES OUVERTURES DE PORTES OU DE FENÊTRES ET APPAREIL DE TRAITEMENT DE L'AIR COMPRIS DANS L'UNITÉ

(30) Priority: 07.03.2017 IT 201700024876
(43) Date of publication of application: 12.09.2018
(73) Proprietor: Alpac S.R.L. Unipersonale, 36015 Schio (VI) (IT)
(72) Inventor: DALLA VIA, Luciano, 36014 SANTORSO VI (IT)
(74) Representative: Modiano, Micaela Nadia

(56) References cited:
- EP-A2- 0 003 811
- JP-A- S5 837 431
- US-A1- 2009 031 744

## Description

The present invention relates to a multifunctional thermally insulating unit for openings for doors or windows.

Investments, both at the national and supranational level, to provide environmentally sustainable buildings are currently increasingly high.

In this context, considering the fact that for example at the European level it is estimated that 40% of primary energy consumption is linked to the construction, operation and decommissioning of buildings, important issues such as the need to design and build systems that are increasingly efficient in order to reduce emissions of greenhouse gases and energy consumption, with an increasing use of renewable sources, find space.

Providing a new building, or renovating an existing one, in terms of energy saving and of renewable energies is an interesting solution which is increasingly often followed both in terms of environmental sustainability and in economic terms.

Some of the solutions that can be used to build or renovate buildings capable of ensuring energy saving can be:
- the adoption of thermally insulated doors and windows in order to minimize heat losses and ensure thermal insulation of the building;
- the adoption, for the building, of an enclosure with a high level of energy efficiency in order to minimize the dispersions of heat and ensure optimum thermal insulation by means of external insulations and insulations inside the perimetric walls;
- the use of thermally insulating units for efficient linking between the external insulation and the doors and windows;
- photovoltaic and accumulation systems for the generation of electric power;
- heat pumps with a single system for heating and cooling, which ensure a reduced consumption of primary energy with respect to traditional combustion systems.

Inside this type of new buildings, which is distinctly more efficient than past ones, the high degree of insulation of the building enclosure is causing, as an unwanted effect, a condition in which the thermal requirements, both during summer climate control, i.e., air conditioning and dehumidification, and during winter climate control, i.e., heating and humidification, have much less predictable trends which can be easily influenced by sudden environmental loads and by the degree of crowding of the environment itself, rendering traditional systems for summer and winter climate control, i.e., radiators, underfloor radiating systems, split climate control units, and the like, obsolete and inefficient since they are forced to follow the environmental loads simultaneously, independently and not always in agreement with seasonality.

For example, on a winter day, in a mountain location, the external temperature is -5°C toward the evening; inside a building, in a dining area there is a reception with a certain number of participants; the other rooms of the dwelling are not occupied at the same time. Two situations can be identified in this dwelling,
- a first situation, related to the dining area, with the need to change the air and provide cooling, since the high degree of insulation of the building prevents the dispersion of the heat generated by the people, causing the temperature to rise above normal comfort levels;
- a second situation, related to the other rooms, with a need for heating, in accordance with a preset internal temperature set point.

In such a case, a traditional system is forced to turn on the conditioning units in the dining area and the heating in the sleeping area, with a considerable energy expenditure.

Today, a summer climate control system is normally used to heat and condition buildings and, this system by means of a built-in heat pump system, is capable of supplying heat depending on the requirements in the colder periods.

Although these systems are known and widespread, despite allowing temperature correction in an indoor environment, they do not change the air of said indoor environment.

EP 0 003 811 A2, US 2009/031744 A1 and JP S58 37431 A relate to a heat exchangers but do not disclose two independent air flows, one for incoming air flow and one for outgoing air flow, each passing independently through same heat exchanger.

If the external air has temperature and humidity characteristics that are useful to improve comfort inside a closed environment, the only currently available effective option is to open a window of said closed environment and let the external air enter the environment naturally, replacing the internal air.

This traditional system of opening a window does not allow to adjust carefully the correct quantity of replacement air and assess objectively and systematically whether the external air has characteristics that are useful or not to improve indoor comfort. For example, in the middle of summer it appears very convenient to open the windows early in the morning or at night to cool the rooms, but if one is not very careful to close them as soon as the temperature begins to rise, the resulting benefit is lost very soon.

Furthermore, opening a window of a heated room in winter or the window of a climate controlled room in the summer causes the unwanted outflow, together with the stale air to be replaced, also of the heat generated by heating means in winter and of the cooled and dehumidified air in summer, thus causing for all practical purposes a waste of the energy consumed by the heating or conditioning means which previously had worked to treat the internal air.

The aim of the present invention is to provide a multifunctional thermally insulating unit for openings for doors or windows that is capable of improving the background art in one or more of the aspects indicated above.

Within this aim, an object of the invention is to provide a unit which allows to change the air of an indoor environment without this entailing a waste of electric power.

Another object of the invention is to provide a unit that allows to change the air in an indoor environment without having to resort to opening a window.

A still further object of the invention is to provide a unit that allows to change the air of an indoor environment without other environments of the same dwelling having to undergo temperature variations for this reason.

Another object of the invention is to provide a unit that allows to save energy on operations for cooling or heating the replacement air that has just been introduced in an indoor environment.

A still further object of the invention is to provide an air treatment apparatus that can be integrated in a unit according to the invention or can be used independently.

Furthermore, an object of the present invention is to overcome the drawbacks of the background art in a manner which is alternative to any existing solutions.

This aim, and these and other objects which will become better apparent hereinafter, are achieved by a multifunctional thermally insulating unit according to claim 1, optionally provided with one or more of the characteristics of the dependent claims.

Further characteristics and advantages of the invention will become better apparent from the description of a preferred but not exclusive embodiment of the multifunctional thermally insulating unit, illustrated by way of nonlimiting example in the accompanying drawings, wherein:

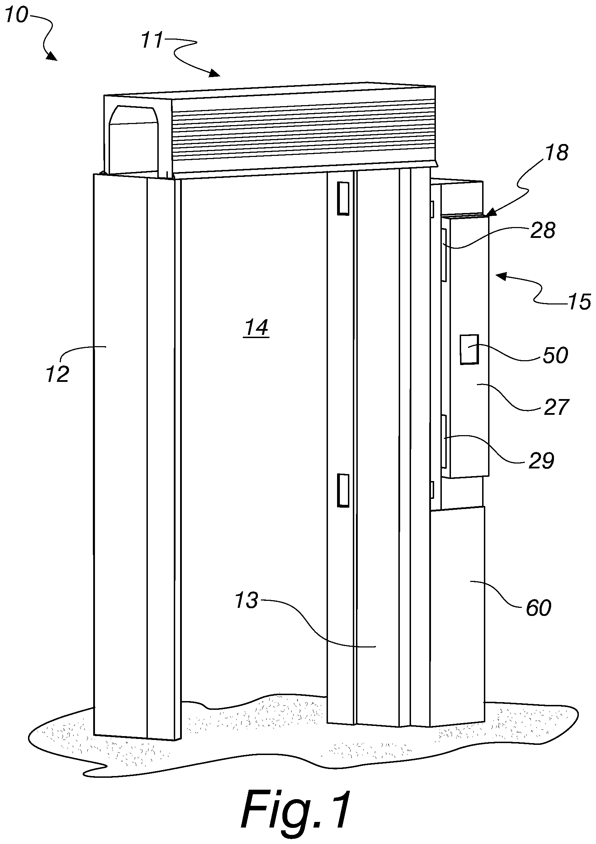

Figure 1 is a perspective view of a unit according to the invention;
Figure 2 is another partially exploded perspective view of the unit according to the invention;
Figure 3 is a perspective view of a detail of the unit according to the invention;
Figure 4 is a view of a constructive variation of the detail of Figure 3;

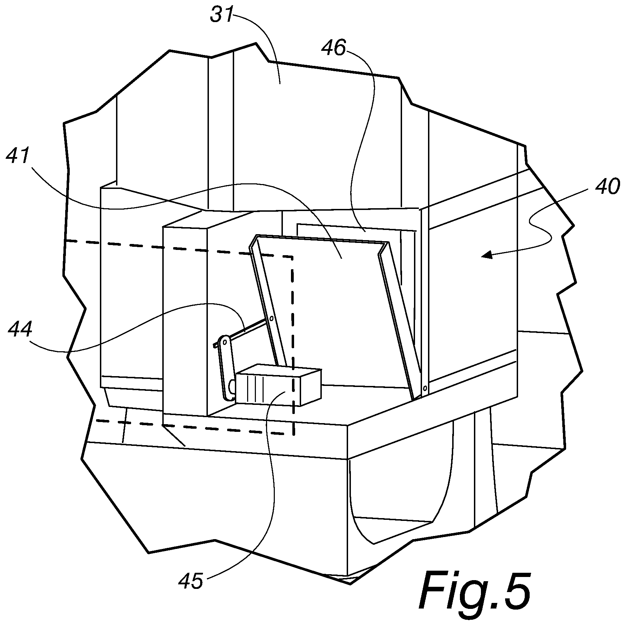

Figure 5 is a view of a detail of Figure 4;
Figure 6 is an exploded perspective view of an air treatment apparatus according to the invention.

With reference to the cited figures, a multifunctional thermally insulating unit according to the invention is designated generally by the reference numeral 10.

Such multifunctional thermally insulating unit 10 for openings for doors or windows comprises
- a box 11 for accommodating a roll-up element,
- two lateral shoulders 12 and 13, which form with said box 11 a compartment 14 for a door or window.

The unit 10 according to the invention comprises, fixed to a lateral shoulder, for example the lateral shoulder 13, heat exchange means with two independent air flows 15 configured to change the air of an indoor environment with external air.

The assembly comprising the box 11 and the two lateral shoulders 12 and 13 forms a containment frame made of plastic material, for example made of extruded polystyrene, and in particular made of XPS, which allows to integrate the thermally insulating unit 10 in a wall of a building.

In particular, in the unit 10 described herein by way of nonlimiting example of the invention, the means 15 for heat exchange with two independent air flows comprise:
- a box-like container 18, which comprises a first internal face 20 and an opposite second external face 24;
- on the first internal face 20 there is an internal air intake port 21, for the flow of air of an indoor environment toward the inside of the box-like container 18, and an external air delivery port 22, for external air toward the internal environment in output from the box-like container 18;
- on the second external face 24 there is an external air intake port 25, for the flow of external air toward the inside of the box-like container 18, and an internal air delivery port 26, for air drawn from the indoor environment toward the external environment, in output from the box-like container 18;
- a heat exchange assembly 23.

The first face 20 of the box-like container 18 is covered by a faceplate 27, on which there is an internal air intake port 28, for the flow of internal air toward the internal air intake port 21 of the box-like container 18, and an external air delivery port 29, for the air that exits from the external air delivery port 22 of the box-like container 18, toward the indoor environment.

The heat exchange assembly 23 comprises:
- an enthalpic heat recovery unit 31,
- a first fan 30, for drawing the air of the external environment, which faces the external air intake port 25 and is adapted to propel the external air aspirated through the enthalpic recovery unit 31 and toward the external air delivery port 22,
- a second fan 32, for drawing the air of the indoor environment, which faces the internal air delivery port 26 and is adapted to draw the internal air from the internal air intake port 21, making it flow through the enthalpic recovery unit 31 toward the internal air delivery port 26 or toward the outside.

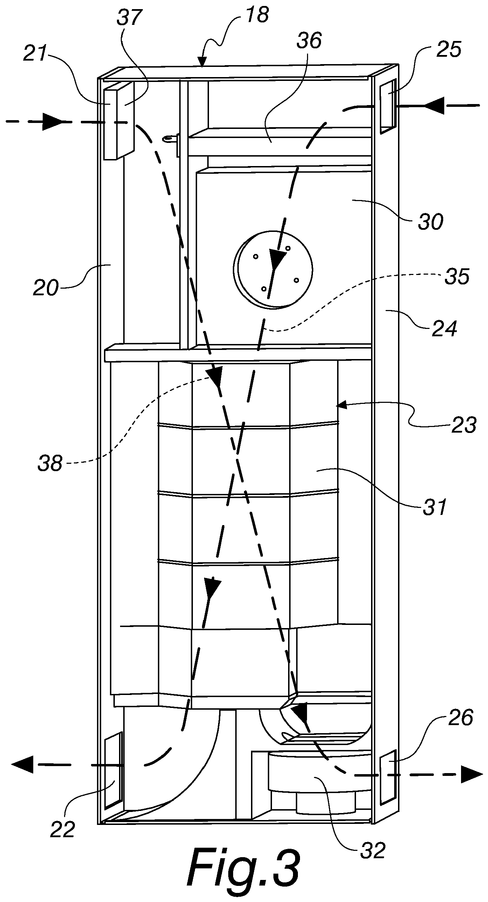

Two air flows, an incoming air flow 35 and an outgoing flow 38, are determined, as shown in Figure 3.

The two air flows 35 and 38 are adapted to pass through corresponding openings and channels for connection between ports, fans and enthalpic recovery unit, which are not shown for the sake of simplicity and are to be understood as being of the known type.

An external air filter 36 is interposed at the external air intake port 25, between said port and the first fan 30.

An internal air filter 37 is interposed at the internal air intake port 21, between said port and the enthalpic recovery unit 31.

The heat exchange unit 23 comprises an integrated free cooling/free heating device 40.

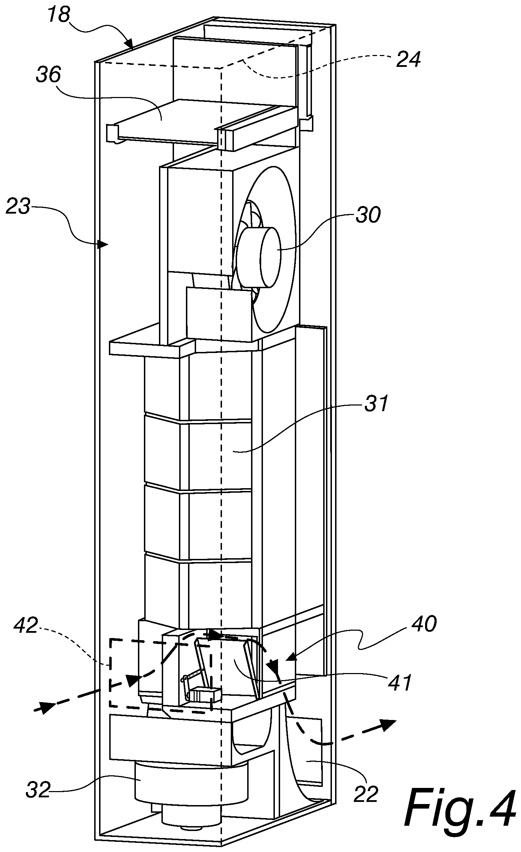

The integrated free cooling/free heating device 40 comprises a motorized shutter 41, which is designed to open toward the second external face 24 of the box-like container 18, shown in broken lines in Figure 4, on which second face 24 there is an external free exchange opening 42, also shown in broken lines in Figure 4, for the direct flow of the external air toward the motorized shutter 41.

The motorized shutter 41 is moved by means of a maneuvering rod 44 which is actuated by an actuator 45, which is to be understood as being of a per se known type.

The motorized shutter 41 is designed to open and close a bypass opening 46, which is configured to connect said external free exchange opening 42 to said external air delivery port 22, bypassing the enthalpic recovery unit 31.

In the present constructive example, the box-like container 18 is made of plastic material, for example extruded polystyrene, and in particular XPS.

The box-like container 18 has a column-like shape.

Inside the box-like container 18, the enthalpic recovery unit 31 is interposed between the first fan 30 and the second fan 32.

For example, the first fan 30 is arranged above the enthalpic recovery unit 31 with respect to a configuration for use, and the second fan 32 is arranged below the enthalpic recovery unit 31.

An arrangement with particular compactness and predominant longitudinal extension for said means 15 as a whole is thus provided.

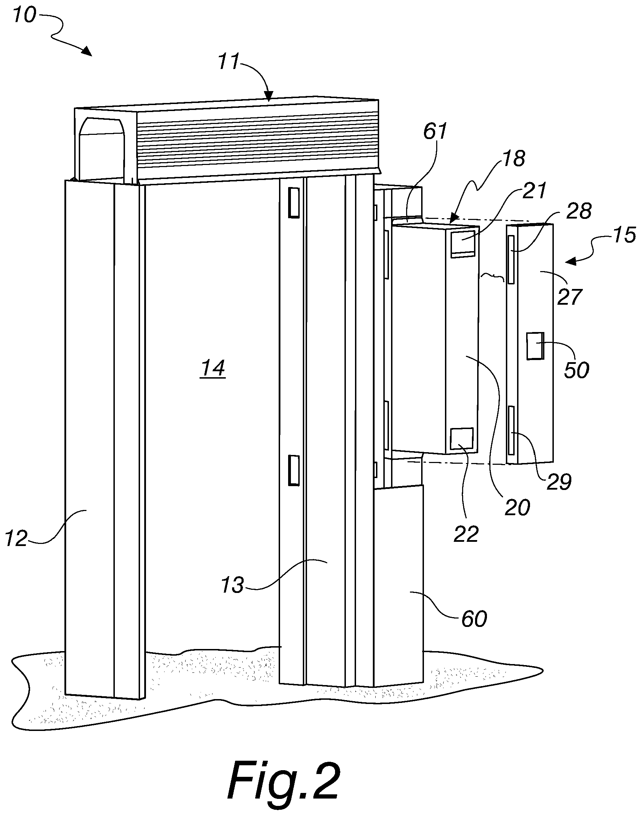

The lateral shoulder 13 of the combined unit 10 is provided with a column-like part 60, in which there is a compartment 61, shown in Figure 2, inside which the box-like container 18 is inserted reversibly.

The column-like part 60 is made of plastic material, for example extruded polystyrene, and in particular XPS.

The column-like arrangement of the heat exchange assembly 23 is therefore well-suited to be contained in a box-like container 18 having a column-like shape, which in turn is contoured to be contained in the compartment 61 of the column-like part 60.

The enthalpic recovery unit 31 is to be understood as being of a per se known type.

The integrated free cooling/free heating device 40 is arranged below the enthalpic recovery unit 31 close to the external air delivery port 22.

By virtue of the integrated free cooling/free heating device 40, if the external thermal and hygrometric conditions of the air have an energy content that is convenient for the heating and/or cooling of the indoor rooms, in accordance with the required comfort levels, the unit 10, contained in the box-like container 18, can direct the external air directly toward the delivery of treated air in the environment, providing energy advantages that arise from bypassing the enthalpic heat recovery unit 31.

The integrated intelligent free cooling/free heating device 40 is controlled directly and in an intelligent manner by an electronic control panel 50 which is arranged on the faceplate 27 and acts intelligently in the calibrated use of the shutter 41 operated by the actuator 45 by means of the rod 44.

The heat exchange means 15 are supplied with electric power by means of a power supply cable which remains inside the containment frame made of XPS.

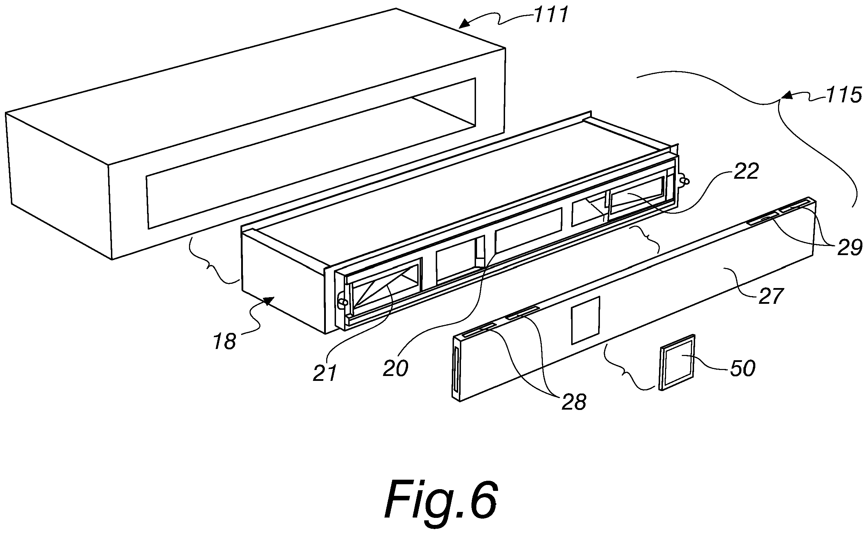

The invention also relates to an air treatment apparatus 115, exemplified in Figure 6, of the type with heat exchange with two independent air flows, which comprises:
- a box-like container 18, which comprises a first internal face 20 and an opposite second external face 24;
- on the first internal face 20 there is an internal air intake port 21, for the flow of air of an indoor environment toward the inside of the box-like container 18, and an external air delivery port 22, for external air toward the indoor environment in output from the box-like container 18;

- on the second external face 24 there is an external air intake port 25, for the flow of external air toward the inside of the box-like container 18, and an internal air delivery port 26, for air drawn from the indoor environment toward the external environment, in output from the box-like container 18;
- a heat exchange assembly 23.

It is to be understood that these components correspond to what has been described above for each one of them in the description of the heat exchange means 15 with two independent air flows integrated in the unit 10 according to the invention.

The air treatment apparatus 115 is designed to be inserted in a complementarily shaped recess formed in a wall of a building, for the exchange of air of an indoor environment with air that arrives from the outside and heat exchange between the two flows.

In one constructive variation, said air treatment apparatus 115 is provided with a containment jacket 111 made of plastic material, for example extruded polystyrene, and in particular XPS, which allows to integrate the apparatus 115 in a wall of a building.

In practice it has been found that the invention achieves the intended aim and objects.

In particular, the invention provides a unit that allows to change the air of an indoor environment without this entailing a waste of electric power, by virtue of the enthalpic heat recovery unit.

Furthermore, the invention provides a unit that allows to change the air of an indoor environment without having to resort to opening a window.

Moreover, the invention provides a unit that allows to change the air of an indoor environment without other environments of the same dwelling having to undergo temperature variations for this reason.

Furthermore, the invention provides a unit that allows to save energy on operations for heating or cooling the replacement air that has just been introduced in an indoor environment, by virtue of the integrated free cooling/free heating device.

Furthermore, the invention provides an air treatment apparatus that can be installed in an existing wall, for example to be renovated, without said wall having to undergo particular and laborious modifications.

The invention thus conceived is susceptible of numerous modifications and variations, all of which are within the scope of the appended claims; all the details may furthermore be replaced with other technically equivalent elements.

In practice, the components and materials used, so long as they are compatible with the specific use, as well as the contingent shapes and dimensions, may be any according to the requirements and the state of the art.

The disclosures in Italian Patent Application No. 102017000024876 (UA2017A001505) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A multifunctional thermally insulating unit (10) for openings for doors or windows, comprising
- a box (11) for accommodating a roll-up element,
- two lateral shoulders (12, 13), which form with said box a compartment (14) for a door or window,
- fixed to a lateral shoulder (13), heat exchange means with two independent air flows (15) which are configured to change the air of an indoor environment with external air,
said heat exchange means with two independent air flows (15) comprising:
- a box-like container (18), which comprises a first internal face (20) and an opposite second external face (24);
- an internal air intake (21), for the passage of air of an indoor environment toward the inside of the box-like container (18), and an external air delivery port (22), for external air toward the indoor environment in output from the box-like container (18), being formed on said first internal face (20);
- an external air intake port (25), for the passage of external air toward the inside of the box-like container (18), and an internal air delivery port (26), for air drawn from an indoor environment toward the external environment, in output from the box-like container (18), being formed on said second external face (24);
- a heat exchange assembly (23);
**characterized in that** the two independent air flows, one for incoming air flow (35) and one for outgoing air flow (38), each passing independently through said heat exchange assembly (23).

2. The unit according to claim 1, **characterized in that** the assembly that comprises the box (11) and the two lateral shoulders (12, 13) forms a containment frame made of plastic material, for example extruded polystyrene, and in particular XPS, which allows to integrate the thermally insulating unit (10) in a wall of a building.

3. The unit according to one or more of the preceding claims, **characterized in that** said first face (20) of the box-like container (18) is covered by a faceplate (27) on which there are an internal air intake port (28), for the passage of internal air toward the internal air intake port (21) of the box-like container (18), and an external air delivery port (29), for the air that exits from the external air delivery port (22) of the box-like container (18), toward the indoor environment.

4. The unit according to one or more of the preceding claims, **characterized in that** said heat exchange assembly (23) comprises:
- an enthalpic heat recovery unit (31),
- a first fan (30), for drawing the air of the outside environment, which faces the external air intake port (25) and is adapted to push the aspirated external air through the enthalpic recovery unit (31) and toward the external air delivery port (22),
- a second fan (32), for drawing the air of the indoor environment, which faces the internal air delivery port (26) and is adapted to draw the internal air from the internal air intake port (21), making it pass through the enthalpic recovery unit (31), toward the internal air delivery port (26), i.e., toward the outside.

5. The unit according to one or more of the preceding claims, **characterized in that** said heat exchange assembly (23) comprises an integrated free cooling/free heating device (40).

6. The unit according to one or more of the preceding claims, **characterized in that** said integrated free cooling/free heating device (40) comprises a motorized shutter (41), which is designed to open toward the second external face (24) of the box-like container (18), on which second face (24) there is an external free exchange opening (42) for the direct flow of the external air toward the motorized shutter (41).

7. The unit according to claim 6, **characterized in that** said motorized shutter (41) is moved by means of a maneuvering rod (44) that is actuated by an actuator (45).

8. The unit according to one or more of the preceding claims 6 and 7, **characterized in that** said motorized shutter (41) is designed to open and close a bypass opening (46), which is configured to connect said external free exchange opening (42) to said external air delivery port (22), bypassing the enthalpic recovery unit (31).

9. The unit according to claim 4, **characterized in that** inside the box-like container (18) the enthalpic recovery unit (31) is interposed between the first fan (30) and the second fan (32).

10. An air treatment apparatus (115), of the type with heat exchange with two independent air flows, comprising:
- a box-like container (18), which comprises a first internal face (20) and an opposite second external face (24);
- on said first internal face (20) there are an internal air intake port (21), for the flow of air of an indoor environment toward the inside of the box-like container (18), and an external air delivery port (22), for external air toward the indoor environment in output from the box-like container (18);
- on said second external face (24) there is an external air intake port (25) for the passage of external air toward the inside of the box-like container (18), and there is an internal air delivery port (26), for air drawn from the indoor environment toward the external environment, in output from the box-like container (18);
- a heat exchange assembly (23);
**characterized in that** the two independent air flows, one for incoming air flow (35) and one for outgoing air flow (38), each passing independently through said heat exchange assembly (23).

## Patentansprüche

1. Eine multifunktionelle wärmeisolierende Einheit (10) für Öffnungen, für Türen oder Fenster die Folgendes umfasst:
- einen Kasten (11) zur Aufnahme eines Aufrollelements,
- zwei seitliche Schultern (12, 13), die mit dem Kasten ein Fach (14) für ein Tür oder Fenster bilden,
- an einer seitlichen Schulter (13) befestigt, Wärmetauschmittel mit zwei unabhängigen Luftströmen (15) die ausgebildet sind, um die Luft eines Innenraums durch Außenluft auszutauschen,
wobei die Wärmetauschmittel mit zwei unabhängigen Luftströmen (15) Folgendes umfassen:
- einen kastenartigen Behälter (18) der eine erste Innenseite (20) und eine gegenüberliegende zweite Außenseite (24) umfasst;
- einen internen Lufteinlass (21) für das Strömen von Luft eines Innenraums zur Innenseite des kastenartigen Behälters (18), und eine Außenluftabgabeöffnung (22) zur Abgabe von Außenluft an den Innenraum, am Ausgang des kastenartigen Behälters (18) geformt an der ersten Innenseite (20);
- einen Außenlufteinlass (25) für das Strömen von Außenluft zum Inneren des kastenartigen Behälters (18) und einen Innenluftauslass (26), für Luft die von einem Innenraum zur äußeren Umgebung gezogen wird, am Ausgang des kastenartigen Behälters (18), geformt an der zweiten Außenseite (24);
- einen Wärmetauschaufbau (23);
**dadurch gekennzeichnet, dass** die zwei unabhängigen Luftströme, einer für den eingehenden Luftstrom (35) und einer für den nach Außen gehenden Luftstrom (38) jeweils unabhängig durch den Wärmetauschaufbau (23) strömen.

2. Die Einheit gemäß Anspruch 1, **dadurch gekennzeichnet, dass** der Aufbau der den Kasten (11) und die zwei seitlichen Schultern (12, 13) umfasst, einen Umfassungsrahmen aus Kunststoffmaterial, zum Beispiel aus extrudiertem Polystyrol, und im Speziellen XPS bildet, der es ermöglicht die wärmeisolierende Einheit (10) in eine Wand eines Gebäudes zu integrieren.

3. Die Einheit gemäß einem oder mehreren der obigen Ansprüche, **dadurch gekennzeichnet, dass** die erste Seite (20) des kastenartigen Behälters (18) von einer Frontplatte (27) bedeckt ist, an der sich eine Innenlufteinlassöffnung (28), für das Strömen von Innenluft zur Innenlufteinlassöffnung (21) des kastenartigen Behälters (18), und eine Außenluftabgabeöffnung (29) für die Luft befinden, die aus der Außenluftabgabeöffnung (22) des kastenartigen Behälters (18) zum Innenraum strömt.

4. Die Einheit gemäß einem oder mehreren der obigen Ansprüche, **dadurch gekennzeichnet, dass** der Wärmetauschaufbau (23) Folgendes umfasst:
- eine enthalpische Wärmerückgewinnungseinheit (31),
- einen ersten Ventilator (30) zum Anziehen der Luft der äußeren Umgebung, der dem Außenlufteinlass (25) zugewandt und ausgebildet ist, um die angesaugte Außenluft durch die enthalpischen Rückgewinnungseinheit (31) und zur Außenluftabgabeöffnung (22) zu drücken,
- einen zweiten Ventilator (32) zum Anziehen der Luft der äußeren Umgebung, der dem Innenluftauslass (26) zugewandt und ausgebildet ist, um die Innenluft aus dem Innenlufteinlass (21) anzuziehen, und sie durch die enthalpische Rückgewinnungseinheit (31), zum Innenluftauslass (26), das heißt nach Außen zu leiten.

5. Die Einheit gemäß einem oder mehreren der obigen Ansprüche, **dadurch gekennzeichnet, dass** der Wärmetauschaufbau (23), eine integrierte Freikühlungs-/Freiheitsvorrichtung (40) umfasst.

6. Die Einheit gemäß einem oder mehreren der obigen Ansprüche, **dadurch gekennzeichnet, dass** die integrierte Freikühlungs-/Freiheitsvorrichtung (40) eine motorisierte Verschlussklappe (41) umfasst, die konstruiert ist, um sich zur zweiten Außenseite (24) des kastenartigen Behältes (18) hin zu öffnen, wobei sich an der zweiten Seite (24) eine äußere Freiaustauschöffnung (42) für die Direktströmung der äußeren Luft zur motorisierten Verschlussklappe (41) hin befindet.

7. Die Einheit gemäß Anspruch 6, **dadurch gekennzeichnet, dass** die motorisierte Verschlussklappe (41) durch eine Manövrierstange (44) bewegt wird, die von einem Antriebselement (45) angetrieben wird.

8. Die Einheit gemäß einem oder mehreren der obigen Ansprüche 6 und 7, **dadurch gekennzeichnet, dass** die motorisierte Verschlussklappe (41) konstruiert ist, um eine Umleitungsöffnung (46) zu öffnen und zu verschließen, die ausgebildet ist, um die äußere Freiaustauschöffnung (42) mit der Außenluftabgabeöffnung (22) zu verbinden, wodurch die enthalpische Rückgewinnungseinheit (31) umgangen wird.

9. Die Einheit gemäß Anspruch 4, **dadurch gekennzeichnet, dass** innerhalb des kastenartigen Behälters (18) die enthalpische Rückgewinnungseinheit (31) zwischen dem ersten Ventilator (30) und dem zweiten Ventilator (32) angeordnet ist.

10. Eine Luftbehandlungsvorrichtung (115) vom Typ mit Wärmeaustausch mit zwei unabhängigen Luftströmen, die Folgendes umfasst:
- einen kastenartigen Behälter (18), der eine erste innere Fläche (20) und eine gegenüberliegende zweite äußere Fläche (24) umfasst;
- an der ersten inneren Fläche (20) befinden sich ein Innenlufteinlass (21) zum Strömen von Luft eines Innenraums zur Innenseite des kastenartigen Behälters (18), und eine Außenluftabgabeöffnung (22) zum Strömen von Außenluft zum Innenraum am Ausgang vom kastenartigen Behälter (18);
- an der zweiten äußeren Seite (24) befinden sich ein Außenlufteinlass (25) für das Strömen von Außenluft zum Inneren des kastenartigen Behälters (18), und ein Innenluftauslass (26) für Luft, die vom Innenraum zur äußeren Umgebung gezogen wird, am Ausgang vom kastenartigen Behälter (18);
- ein Wärmetauschaufbau (23);
**dadurch gekennzeichnet, dass** die zwei unabhängigen Luftströme, einer für eingehenden Luftstrom (35) und einer für nach außen gehenden Luftstrom (38), jeweils unabhängig durch den Wärmetauschaufbau (23) strömen.

## Revendications

1. Unité d'isolation thermique multifonctionnelle (10) pour ouvertures de portes ou de fenêtres, comprenant
- une boîte (11) destinée à recevoir un élément enroulable,
- deux épaulements latéraux (12, 13), qui forment avec ladite boîte un compartiment (14) pour une porte ou fenêtre,
- fixés à un épaulement latéral (13), des moyens d'échange de chaleur à deux flux d'air indépendants (15) qui sont configurés pour changer l'air d'un environnement intérieur avec de l'air externe,
lesdits moyens d'échange de chaleur à deux flux d'air indépendants (15) comprenant :
- un contenant du type boîte (18), qui comprend une première face interne (20) et une seconde face externe opposée (24) ;
- un orifice d'admission d'air interne (21), pour le passage d'air d'un environnement intérieur vers l'intérieur du contenant du type boîte (18), et un orifice de refoulement d'air externe (22), pour de l'air externe sortant du contenant du type boîte (18) vers l'environnement intérieur, étant formés sur ladite première face interne (20) ;
- un orifice d'admission d'air externe (25), pour le passage d'air externe vers l'intérieur du contenant du type boîte (18), et un orifice de refoulement d'air interne (26), pour de l'air aspiré d'un environnement intérieur sortant du contenant du type boîte (18) vers l'environnement externe, étant formés sur ladite seconde face externe (24) ;
- un ensemble d'échange de chaleur (23) ;
**caractérisé en ce que**
- les deux flux d'air indépendants, un pour un flux d'air entrant (35) et un pour un flux d'air sortant (38), passent chacun indépendamment à travers ledit ensemble d'échange de chaleur (23).

2. Unité selon la revendication 1, **caractérisée en ce que** l'ensemble qui comprend la boîte (11) et les deux épaulements latéraux (12, 13) forme un cadre de confinement fait d'une matière plastique, par exemple du polystyrène extrudé, et en particulier du XPS, qui permet d'intégrer l'unité d'isolation thermique (10) dans un mur d'un bâtiment.

3. Unité selon une ou plusieurs des revendications précédentes, **caractérisée en ce que** ladite première face (20) du contenant du type boîte (18) est recouverte d'une plaque avant (27) sur laquelle se trouvent un orifice d'admission d'air interne (28), pour le passage d'air interne vers l'orifice d'admission d'air interne (21) du contenant du type boîte (18), et un orifice de refoulement d'air externe (29), pour l'air qui sort par l'orifice de refoulement d'air externe (22) du contenant du type boîte (18) vers l'environnement intérieur.

4. Unité selon une ou plusieurs des revendications précédentes, **caractérisée en ce que** ledit ensemble d'échange de chaleur (23) comprend :
- une unité de récupération de chaleur enthalpique (31),
- un premier ventilateur (30), pour aspirer l'air de l'environnement extérieur, qui fait face à l'orifice d'admission d'air externe (25) et est conçu pour pousser l'air externe aspiré à travers l'unité de récupération enthalpique (31) et vers l'orifice de refoulement d'air externe (22),
- un second ventilateur (32), pour aspirer l'air de l'environnement intérieur, qui fait face à l'orifice de refoulement d'air interne (26) et est adapté à aspirer l'air interne à partir de l'orifice d'admission d'air interne (21), en le faisant passer à travers l'unité de récupération enthalpique (31), vers l'orifice de refoulement d'air interne (26), c'est-à-dire vers l'extérieur.

5. Unité selon une ou plusieurs des revendications précédentes, **caractérisé en ce que** ledit ensemble d'échange de chaleur (23) comprend un dispositif de refroidissement naturel/chauffage naturel intégré (40).

6. Unité selon une ou plusieurs des revendications précédentes, **caractérisée en ce que** ledit dispositif de refroidissement naturel/chauffage naturel intégré (40) comprend un obturateur motorisé (41), qui est conçu pour s'ouvrir vers la seconde face externe (24) du contenant du type boîte (18), sur laquelle seconde face (24) se trouve une ouverture d'échange naturel externe (42) pour le flux direct de l'air externe vers l'obturateur motorisé (41).

7. Unité selon la revendication 6, **caractérisée en ce que** ledit obturateur motorisé (41) est déplacé au moyen d'une tige de manœuvre (44) qui est actionnée par un actionneur (45).

8. Unité selon une ou plusieurs des revendications précédentes 6 et 7, **caractérisée en ce que** ledit obturateur motorisé (41) est conçu pour ouvrir et fermer une ouverture de dérivation (46), qui est configurée pour raccorder ladite ouverture d'échange naturel externe (42) audit orifice de refoulement d'air externe (22) en évitant l'unité de récupération enthalpique (31).

9. Unité selon la revendication 4, **caractérisée en ce qu'**à l'intérieur du contenant du type boîte (18), l'unité de récupération enthalpique (31) est interposée entre le premier ventilateur (30) et le second ventilateur (32).

10. Appareil de traitement d'air (115), du type à échange de chaleur à deux flux d'air indépendants, comprenant :
- un contenant du type boîte (18), qui comprend une première face interne (20) et une seconde face externe opposée (24) ;
- sur ladite première face interne (20) se trouvent un orifice d'admission d'air interne (21), pour le flux d'air d'un environnement intérieur vers l'intérieur du contenant du type boîte (18), et un orifice de refoulement d'air externe (22), pour de l'air externe sortant du contenant du type boîte (18) vers l'environnement intérieur ;
- sur ladite seconde face externe (24) se trouve un orifice d'admission d'air externe (25) pour le passage d'air externe vers l'intérieur du contenant du type boîte (18), et se trouve un orifice de refoulement d'air interne (26), pour de l'air aspiré de l'environnement intérieur sortant du contenant du type boîte (18) vers l'environnement externe ;
- un ensemble d'échange de chaleur (23) ;
**caractérisé en ce que**
- les deux flux d'air indépendants, un pour un flux d'air entrant (35) et un pour un flux d'air sortant (38), passent chacun indépendamment à travers ledit ensemble d'échange de chaleur (23).
